(19) Europäisches Patentamt
European Patent Office
Office européen des brevets

(11) Publication number: **0 225 560**
**A1**

(12) # EUROPEAN PATENT APPLICATION

(21) Application number: **86116570.2**

(22) Date of filing: **28.11.86**

(51) Int. Cl.⁴: **C 21 C 5/36**, C 21 C 5/54, C 21 C 7/076

(30) Priority: **03.12.85 IT 2307685**

(43) Date of publication of application: **16.06.87 Bulletin 87/25**

(84) Designated Contracting States: **AT BE CH DE FR GB LI NL SE**

(71) Applicant: **Crespi, Giovanni, C.so Matteotti No. 44, I-28038 S. Maria Maggiore Novara (IT)**

(72) Inventor: **Crespi, Giovanni, C.so Matteotti No. 44, I-28038 S. Maria Maggiore Novara (IT)**

(74) Representative: **Coloberti, Luigi, Via E. de Amicis No. 25, I-20123 Milano (IT)**

(54) **Fluidizing composition for basic slag for steel-making furnaces.**

(57) The composition comprises fluorine-free natural silicates chosen in the group made up of nepheline, syenite, nepheline syenite, leucite, pegmatite, orthoclase, feldspar and feldspathoids, and their mixtures.

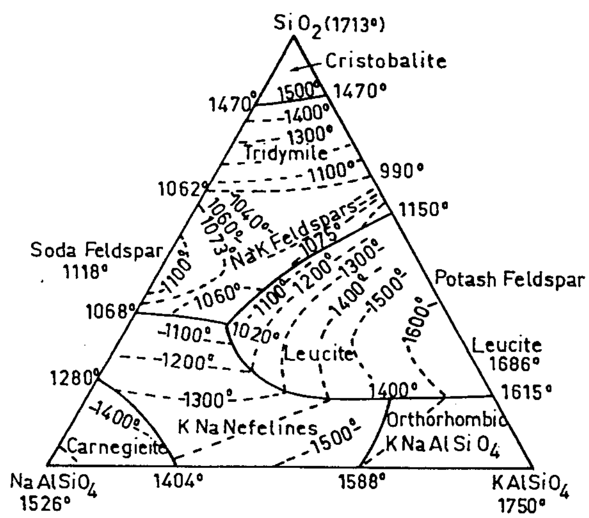


EP 0 225 560 A1

This invention concerns a fluidizing composition particularly suitable for obtaining basic slag melted during the steelmaking processes.

The liquid steel produced in electric arc furnaces, in LD-type oxygen converters and/or the like, must be ridded of impurities, especially sulphur, phosphorus and iron oxides.

The speed and efficacy of the steel refining process depend mainly on the speed with which suitably fluid slag is obtained which is capable of reacting with the steel in order to rid it of the aforesaid impurities.

These results are traditionally achieved by preparing slag which, in addition to calcium oxide, also contain fluorite (Ca F2) as the flux; the slag thus obtained however has the disadvantage of giving off vapors containing silicon tetrafluoride gas at high furnace temperatures, which are particularly dangerous and harmful for the personnel in charge of the furnaces.

In order to overcome these problems, other fluidizing compositions based on bauxite, cryolite, aluminium residues and sodium carbonate were made; these mixtures have the drawback of producing a slag which is not particularly reactive towards the impurities in the steel, with the

result that it is not refined quickly enough. These compositions also contain traces of fluorite and therefore do not solve the previously described problems.

The scope of this invention is consequently to produce a flux, that is to say, a fluidizing composition for the basic slag of steelworks which, unlike those known to date, does not give rise to the generation of fluorine vapors (deriving from the fluorite) which are detrimental to health, and whereby it is possible to rapidly obtain sufficiently fluid slag which reacts towards liquid steel.

These and other scopes are achieved by the fluidizing composition for basic slag of steelworks according to this invention, substantially comprising natural fluorine-free alkaline silicates and others, for melting the aforementioned slag.

With respect to the conventional compositions of the same type, those produced according to this invention offer the advantage of causing rapid fluidization of the slag without any formation whatsoever of gases injurious to health and, together with the lime, producing a scorifying composition which reacts rapidly with the molten steel, so as to rid the latter of impurities.

As mentioned previously, the speed of the steel refining process depends largely upon the speed with which the basic slag with a high degree of fluidity is formed. The speed of this process, which essentially consists of decarburizing, dephosphorizing, deoxidizing and desulphurizing the liquid steel, also depends, in addition to the temperature, upon the correct proportioning of the components of the slag, both in oxygen converters and in arc furnaces. The slag of the LD oxygen converters has on average the following chemical compositions:

| | | | |
|---|---|---|---|
| CaO % | 40 | 49.5 | 38.5 |
| $SiO_2$ % | 20 | 14 | 17 |
| $Al_2O_3$ % | 3 | 3 | - |
| Fe oxides % | 23.8 | 26 | 20.5 |
| MgO % | 6.3 | 2 | 6 |
| MnO % | 1.5 | 5.8 | 6.7 |
| $P_2O_5$ % | 0.5 | 1.2 | 1.5 |
| S % | 0.1 | 0.2 | 0.1 |

In oxygen converters, the decarburizing, dephosphorizing and desulphurizing are fundamental, consequently in the composition of the slag it is necessary to make allowances for the chemical reactions which take place. In particular, the dephosphorizing, which occurs simultaneously to the decarburizing, is achieved in the presence of basic slag, which fixes the phosphoric anhydride in the form of calcium phosphate, and which gradually originates from the phosphorus and oxygen contained in the molten steel. Hence we have:

$$2P + 5FeO + 3CaO \rightleftharpoons P_2O_5 \cdot 3CaO + 5Fe$$

The sulphur is eliminated to a certain degree (7-8%) in the form of anhydride and for the most part by means of reaction with the slag:

$$FeS + CaO \rightleftharpoons CaS + FeO$$

The reaction shifts towards the right, that is, towards a more complete desulphurization of the steel, as the basicity of the slag increases; the reaction speed obviously depends both upon the activity of the FeO (which initially helps to dissolve the lime forming low-melting calcium ferrites, such as $CaFe_2O_4$, $CaFeO_7$, with a melting point ranging from 1216 to 1230°C) and upon the composition and the temperature of the liquid steel.

In the arc furnaces, the addition of a reducing agent to the basic slag (carbon, silicon, aluminium) in the form of coke and silicon, to reduce the oxides, greatly increases the desulphurizing power of the slag according to the

reaction:

$$FeS + CaO + C \rightleftharpoons CaS + CO + Fe$$

In order to achieve satisfactory desulphurization, it is necessary to produce slag with an "i" basicity index:

$$i = \frac{CaO + MgO + \text{other bases}}{SiO_2 + P_2O_5} = 3.5 / 3.8$$

According to this invention, the refining of the steel is facilitated by means of the rapid formation of fluid and reactive slag which is obtained by adding the above-mentioned fluorine-free natural silicates to the basic slag, so as to prevent the generation of harmful toxic gases.

For this purpose, a fluidizing composition has been produced for the basic slag of steelworks, which consists of a mixture of mineral silicates such as nepheline syenite, leucite, pegmatite, syenite, orthoclase, nepheline, feldspar and feldspathoids, characterized by a high sodium and potassium content ($Na_2O$, $K_2O$), which together can total 10/15% in weight and with a melting point ranging from 1100°C to 1385°C, according to the ternary diagram:

$SiO_2$ - $NaAlSiO_4$ - $KAlSiO_4$ (Fig. 1)

This composition quickly forms a highly fluid and highly reactive slag which accelerates the refining reactions of the steel. These reactions develop in the steelmaking furnace under molten metal and, as far as desulphurizing is concerned, can continue in the bottom pouring ladle with treatment outside the furnace by insuflating the fluidizing mixture with lime (CaO) or by preparing the latter on the bottom of the ladel. For this purpose, the fluidizing mixture can be enriched by the addition of sodium carbonate in proportions ranging from 3-6% and/or 5-10% of bauxite, in weight.

Said fluidizing mixture is obtained from approximately 15-25% in alkaline silicates and from 75-85% in weight of CaO; the material fluidizing with lime (CaO) is generally used in lengths of 1-5 mm; products obtained directly from quarries, which are, if necessary, bonded with alkaline silicates, bonding resins or bentonite, are also used.

Bearing in mind certain drawbacks caused by lime which absorbs humidity from the outside environment, it has been found expedient to substitute the use of lime in manufacturing steelmaking slag, either totally or partly,

about 20-40%, with limestone, bearing in mind, in the latter case, that twice the amount in weight of limestone is required with respect to lime.

Limestone in granules of 1 to 4 mm for preparing the lime can be mixed with dolomitic limestone (containing magnesium) in granules from 1 to 4 mm and then mixed and pelletized with the above-mentioned feldspathoid-based fluidizers before being used in the steelmaking furnaces.

The transformation of the limestone at the high temperatures of the steelmaking furnaces gives rise to the development of $CO_2$ which splits up into the ions C and O which take part in the reactions in the slag being formed, with economy in the consumption of oxygen (in LD furnaces) and with better elimination of nitrogen, phosphates and sulphurs from the molten metal, due to the fact that the liquid steel is brought to a fast boil by the development of $CO_2$.

According to a further embodiment, the invention is directed to a fluidizing composition comprising a mixture of lime and natural silicates melting material, in which the melting material comprises merely nepheline-syenite mineral material having a content of alkaline

salts of about 15% ($Na_2O$, $K_2O$), to improve the desulphurizing action.

Claims

1. Fluidizing composition for basic slag of steelmaking furnaces, said fluidizing composition comprising fluorine-free natural silicates to facilitate the melting of the lime, which is an essential component of slag, in which said natural silicates are chosen in the group made up of nepheline, syenite, nepheline syenite, leucite, pegmatite, orthoclase, feldspar, feldspathoids, and their mixtures; said minerals being in granules and/or powder premixed with lime and/or limestone and being capable of forming deoxidizing, desulphurizing and dephosphatizing slag in the arc furnaces and oxygen furnaces of steelworks.

2. Composition as claimed in claim 1, in which said natural silicates have a sodium and potassium content, in the form of oxides, ranging from 10-15% in weight, and melting points ranging from 1100°C to 1385°C.

3. Composition as claimed in claim 1, containing from 3-5% of sodium carbonate.

4. Composition as claimed in claim 1, which contains agglomerating binders.

5. Composition as claimed in claim 4, in which

said binders are sodium silicates, bentonite, bonding resins.

6. Composition as claimed in claim 1, in which 5-10% of bauxite is added.

7. Composition as claimed in claim 1, further comprising a mixture of lime and limestone, in which the limestone is double in quantity with respect to the lime.

8. Composition as claimed in claim 7, in which the limestone or the lime and limestone mixture is in pelletized form, with the fluidizer.

9. Composition as claimed in claim 1, comprising a mixture of lime and natural silicates melting materials, in which the melting material comprises merely nepheline-syenite mineral material having a content of alkaline salts of about 15%.

10. Composition as claimed in claim 1, further comprising a mixture of limestone and dolomitic limestone.

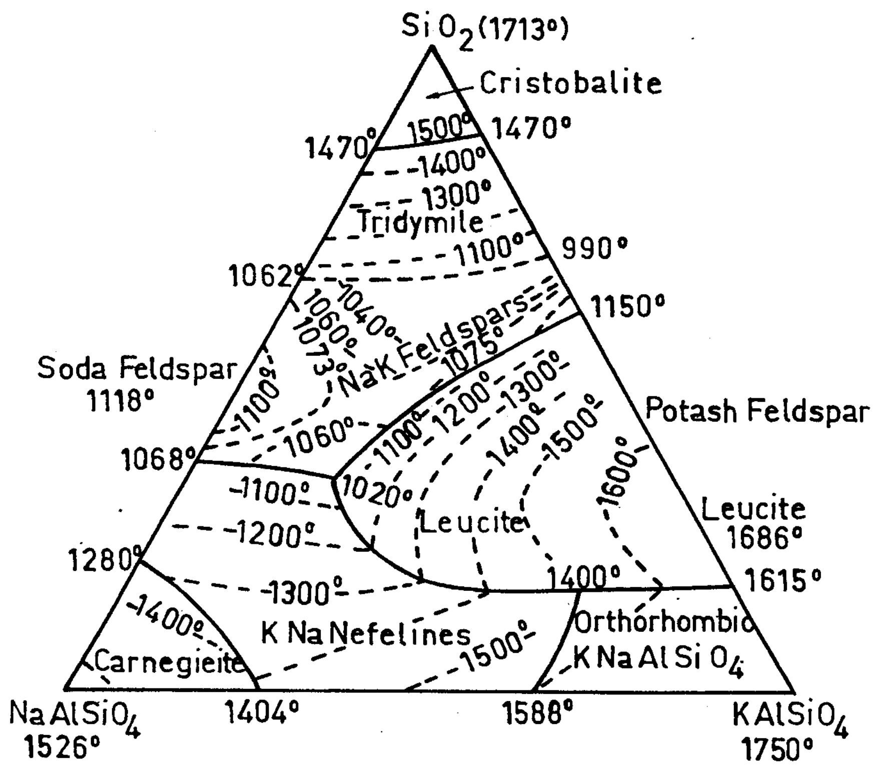

$SiO_2$ (1713°)
Cristobalite
1470°
1500°
1470°
1400°
1300°
Tridymite
1100°
990°
1062°
1040°
1060°
1073°
NaK Feldspars
1075°
1150°
Soda Feldspar
1118°
1100°
1060°
1100°
1200°
1300°
1400°
1500°
Potash Feldspar
1068°
1600°
1100°
1020°
Leucite
Leucite
1686°
1200°
1280°
1300°
1400°
1615°
1400°
K Na Nefelines
Orthorhombic
K Na Al Si $O_4$
Carnegieite
1500°
$NaAlSiO_4$
1526°
1404°
1588°
$KAlSiO_4$
1750°

European Patent Office

# EUROPEAN SEARCH REPORT

0225560 Application number

EP 86 11 6570

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-3 998 624 (HARRIS et al.) * Abstract; claims 1,14-19 * | 1-10 | C 21 C 5/36<br>C 21 C 5/54<br>C 21 C 7/076 |
| Y | GB-A-1 558 567 (STEETLEY) | 1-10 | |
| A | EP-A-0 034 639 (PETERLONGO et al.) | | |
| A | METALS ABSTRACTS, vol. 12, February 1979, page 103, abstract no. 45-0057, The Metals Society, London, GB; "Desulphurization of metal when using Nepheline Ore", & S.S. BRYUKHOVETSKII, METALLURG; April 1978 (4), 20-22 | | |
| A | US-A-1 890 485 (AMSLER) | | TECHNICAL FIELDS SEARCHED (Int. Cl.4)<br>C 21 C |
| A | CHEMICAL ABSTRACTS, vol. 104, no. 16, 21st April 1986, page 247, abstract no. 133918t, Columbus, Ohio, US; & SU-A-1 191 473 (KOMMUNAR MINING-METALLURGICAL INSTITUTE) 15-11-1985 | | |

The present search report has been drawn up for all claims

| Place of search | Date of completion of the search | Examiner |
|---|---|---|
| THE HAGUE | 11-03-1987 | OBERWALLENEY R.P.L.I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82